# EUROPÄISCHE PATENTANMELDUNG

(11) **EP 0 757 268 A1**
(43) Veröffentlichungstag der Anmeldung: **05.02.1997**
(21) Anmeldenummer: 95890144.9
(22) Anmeldetag: 02.08.1995
(51) Int. Cl.: G02B 7/02, G09F 9/30, G02B 6/36

(54) **Faseroptik-Linsenbefestigung**

(71) Anmelder: SWARCO FUTURIT Verkehrssignalsysteme Ges.m.b.H., A-3300 Amstetten (AT)
(72) Erfinder: Silhengst, Franz, A-3004 Ollern (AT); Otto,Alexander,Dipl.-Ing., 2102 Bisamberg (AT)
(74) Vertreter: Patentanwälte BARGER, PISO & PARTNER

(57) **Zusammenfassung**

Es wird ein Verfahren zur Befestigung von Faseroptik-Linsenelementen in der Frontplatte eines Faseroptik-Gerätes beschrieben, welches eine exakte Ausrichtung aller Linsenelemente bei gleichzeitiger Abdichtung garantiert. Hierbei wird das Optikgehäuse in ein Loch der Frontplatte eingesetzt und durch Einpressen des Optikelementes durch geeignete Ausbildung der Fügeflächen derart verformt und verspannt, daß eine pop-nietenartige, formschlüssige, exakte, dichte und dauerhafte Verbindung entsteht.

## Beschreibung

Die Erfindung betrifft alle Signal-, Verkehrs- und Anzeigegeräte, welche nach dem Prinzip der Faseroptik arbeiten. Hierbei wird das gebündelte Licht einer oder mehrerer Glühlampen mittels optischer Fasern ("Lichtleiter") auf eine Vielzahl zumeist baugleicher optischer Elemente, auch "Optiken", "Lichtpunkte" oder "Linsen" genannt, aufgeteilt. Diese sind an der Frontseite des Gerätes befestigt und derart angeordnet, daß die zu einer Lampe oder Lampengruppe gehörigen Lichtpunkte eine symbolische Darstellung oder alphanumerische Zeichen bilden.

Die Geräte mit den höchsten technischen Anforderungen finden insbesonders in der Verkehrssignaltechnik Verwendung, wobei in der Regel durch Umschalten der Lampen zwischen verschiedenen Symbolen und Texten ausgewählt werden kann ("Wechselverkehrszeichen").

Die an solche Geräte gestellten Anforderungen bestehen insbesondere hinsichtlich höchster Witterungs- und Temperaturstabilität, Dichtheit, Helligkeit der Zeichendarstellung, Gleichmäßigkeit der einzelnen Lichtpunkte etc. Die Erfüllung dieser Ansprüche hängt zum größten Teil von der Art der Befestigung der einzelnen Optiken in der Frontseite des Gerätes, auch "Matrixplatte" genannt, ab.

Wurde früher die Abdichtung der Geräte durch eine vorgesetzte Scheibe bewirkt, so hat sich heute aus vielen Gründen die Bauform ohne Frontscheibe durchgesetzt. Daher muß zusätzlich zu den optischen und mechanisch-geometrischen Anforderungen auch der absolut dichte Einbau der Optiken gefordert werden.

Bisher sind Ausführungen bekannt, bei denen die Optiken in die Löcher der Matrixplatte eingepreßt oder eingesetzt werden. Die Sicherung gegen Herausfallen und Abdichtung erfolgt durch Klebstoff, Vergußmasse oder mechanische Sperrelemente und Dichtungen. Das saubere Hantieren mit Klebstoff und die sichere Abdichtung stellen hohe, auch personelle Anforderungen an die Fertigung.

Weiters sind Ausführungen bekannt, wo in die Matrixlöcher Gummitüllen eingeschnappt werden, in welche wiederum die Optiken eingeschnappt werden. Diese Ausführungen weisen allerdings eine gewisse Elastizität in der Befestigung auf, welche sich in einem uneinheitlichen Abstrahlungswinkel äußert.

Weiters sind Ausführungen bekannt, wo die Befestigung schraubenähnlich mittels Dichtring und Mutter erfolgt. Hierdurch wird üblicherweise ein größerer Abstand benachbarter Optiken notwendig.

Weiters sind Ausführungen bekannt, wo Optiken dicht eingepreßt und durch elastische Schnapphaken gesichert werden. Die Ausbildung der Schnapphaken bedingt ein kompliziertes Optikgehäuse, welches wenig stabil und nicht lichtdicht ist. Außerdem sind alle Konstruktionen mit Schnappmechanismus an eine definierte Stärke der Matrixplatte gebunden.

Gesucht war eine Befestigungsmethode, welche einfach und rasch durchgeführt werden kann, die sicher in der Funktion und unempfindlich gegenüber gewissen Toleranzen der Bauteile und der Fertigung ist; welche ohne Klebstoff dicht ist; welche eine exakte Positionierung und Ausrichtung jeder einzelnen Optik garantiert; welche auch leicht in der Fertigung automatisierbar ist; welche ein stabiles, geschlossenes, die Linse schützendes und Fremdlicht abschirmendes Optikgehäuse erlaubt; welche einen möglichst geringen Abstand benachbarter Optiken erlaubt; welche von der Art der verwendeten Optik unabhängig ist; welche Matrixplatten unterschiedlicher Stärke und unterschiedlichen Materials zuläßt; welche einfachen Ein- und Ausbau und Nachrüstung der Optiken auch am Aufstellungsort erlaubt, und welche absolut druckdicht und unempfindlich gegenüber jeglichen Reinigungsmethoden ist.

Dieses Problem wird erfindungsgemäß dadurch gelöst, daß eine bekannte Methode aus dem Bereich der allgemeinen Befestigungstechnik, nämlich das Prinzip des "Nadeldübels" adaptiert wird. Dieses beruht darauf, daß ein in eine Bohrung eingesteckter Dübel dadurch aufgeweitet wird, daß ein i.a. zylindrischer härterer Teil ("Nagel") in das engere Loch des weicheren Dübels eingetrieben wird. Das bewirkt eine elastischplastische Verformung des Dübels in die Reifen und Hohlräume der Bohrung und damit den sicheren Halt der Anordnung. Die Optik ist daher zweiteilig aufgebaut, wobei das Optikgehäuse die Funktion des Dübels und das lichtlenkende optische Element die Funktion des Nagels übernimmt, allerdings ohne später mechanisch belastet zu werden. Zusätzlich wird die Möglichkeit der Abdichtung genützt.

In der Zeichnung ist der Gegenstand der Erfindung beispielsweise anhand schematischer Darstellungen näher erläutert. Die Fig. 1 und 2 zeigen zwei mögliche Ausbildungen der Bauelemente vor dem Einbau, die Fig. 3 und 4 nach erfolgtem Einbau. Die Fig. 5 bis 7 zeigen mögliche Ausführungsformen der Anordung von Optikgehäuse und Optikelement und die Fig. 8 zeigt Lochform und Querschnitt des Optikelements.

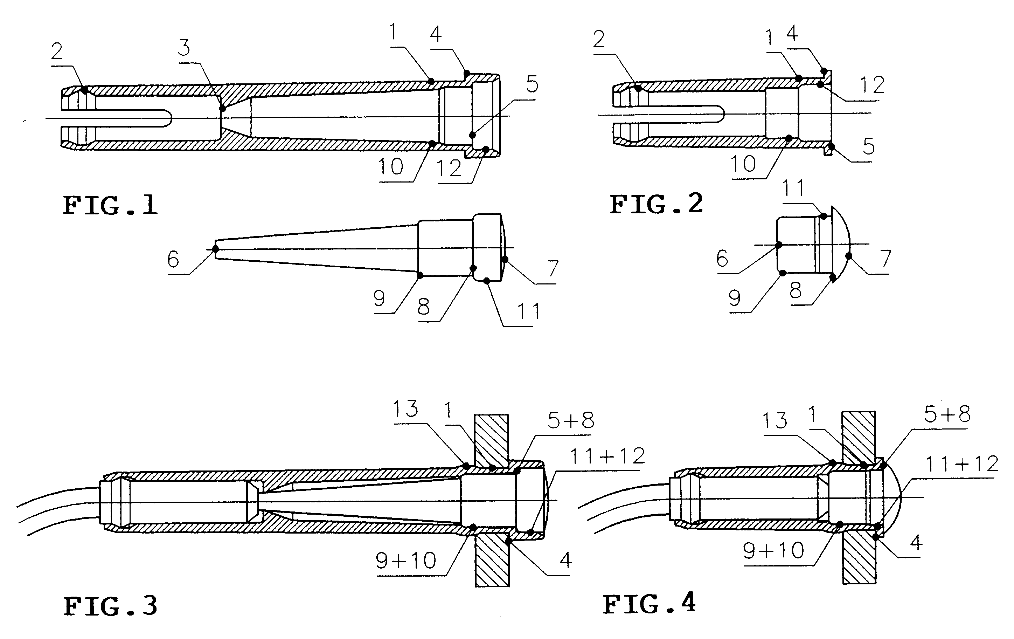

Fig. 1 ist eine sogenannte Kegeloptik, Fig. 2 eine sogenannte Linsenoptik. Beide Bauarten besitzen dasselbe Befestigungsprinzip. Das Optikgehäuse besteht aus einem im wesentlichen zylindrischen Schaft 1, an dessen einem Ende eine beliebig gestaltete Halterung 2 für das Lichtleiterende, sowie innen allfällig eine Halterung für das Optikelement 3 angebracht ist. Am anderen Ende befindet sich ein Bund 4, der als exakte Auflage für die Matrixplatte dient. Die Innenseite des Gehäuses besteht aus mehreren Zylinder- und Übergangsflächen sowie einer Auflagefläche 5, welche als exakter Anschlag für das Optikelement dient.

Das Optikelement besteht aus mehreren zyLindrischen Abschnitten mit Übergangsflächen, der Lichteintrittsfläche 6, der Lichtaustrittsfläche 7 und der Auflagefläche 8. Weiters weist es an zwei Stellen ein Übermaß gegenüber den entsprechenden Stellen im Optikgehäuse auf, einmal an der Schulter 9, welche auf die Verengung 10 trifft, das andere Mal im Bereich 11, welcher mit der Fläche 12 zusammentrifft. Die anderen nicht bezeichneten Gehäuseflächen erfüllen Übergangs- und Einlaufschrägenfunktionen sowie Freistellungen des Optikelements, die hierbei entstehenden HohlräuMe dienen optischen Zwecken sowie dem Toleranzausgleich.
Die nicht bezeichneten Flächen des Optikelementes dienen zum Teil als Übergangsflächen, zum Teil der optischen Lichtführung.

Bei der Montage wird das Optikgehäuse von vorne in das Matrixplattenloch eingesetzt. Der Schaft 1 des Gehäuses hat hierbei vorzugsweise leichtes Übermaß, sodaß das Gehäuse von selbst hält und zentriert ist. Danach wird das Optikelement ebenfalls von vorne in das Gehäuse eingeschoben. Wenn die Flächen mit Übermaß zusammentreffen, wird das Optikelement entweder durch Preßkraft oder einen dosierten Schlag weiter eingepreßt, bis die Flächen 5 und 8 einander berühren. Die Einpreßkraft sorgt auch dafür, daß das Gehäuse dabei an die Matrixplatte angepreßt und exakt ausgerichtet wird.

Das steife, vollwandige Optikelement weitet mit der Schulter 9 das dünnwandige Gehäuse an der Stelle 10 auf. Das Gehäusematerial wird hierbei plastisch beansprucht und fließt einerseits in die Riefen des Matrixloches, anderseits bildet das überschüssige Material einen Wulst 13 hinter dem Loch, welcher die Optik fixiert. Das Durchmesserpaar 11+12 ist hier so dimensioniert, daß nur ein leichtes Übermaß entsteht und die Aufweitung im elastischen Bereich bleibt. So bleiben die Auflageflächen 4, 5 und 8, welche die Position sichern, unbeeinflußt. Weil die Flächenpaare 9+10 und 11+12 zylindrische Flächen sind, entstehen im wesentlichen nur radiale Spannkräfte, welche nicht in der Lage sind, das eingepreßte Optikelement selbsttätig aus dem Gehäuse wieder hinauszudrängen.

Durch diese Fügetechnik sichern drei Bereiche Position und Dichtheit der Optik. Die Auflageflächen 4, 5 und 8 sichern die axiale Position, rechtwinkelig zur Matrixplatte. Das leichte Übermaß der Durchmesser 1, 11 und 12 bewirkt die Zentrierung der Optik auf der Außenseite der Matrixplatte, und der plastisch geformte Wulst 13 zentriert und hält die Optik auf der Innenseite der Matrixplatte.

Gleichzeitig entsteht an diesen drei Stellen eine Dichtwirkung. So dichtet das Optikgehäuse zur Matrixplatte an den Stellen 4, 1 und 13. Das Optikelement zum Gehäuse an den Stellen 5+8, 9+10 und 11+12. Im Fall der Anwendung eines Hochdruckreinigers wird das Optikelement durch den Wasserdruck zusätzLich gegen die Fläche 5 des Gehäuses und dieses mit der Fläche 4 gegen die Matrixplatte gedrückt, was eine weitere Verstärkung der Dichtwirkung bedeutet.

Die gezeigte Ausführung beeinträchtigt den Lichtdurchgang durch das Optikelement bei geeigneter Geometrie in keiner Weise, da eine Berührung mit dem Gehäuse nur an sogenannten "Schattenstellen", also optisch nicht aktiven Oberflächenbereichen erfolgt.

Die Befestigungsmethode ist unabhängig von der Wandstärke der Matrixplatte, weil der Wulst 13 erst je nach Position der Lochhinterkante gebildet wird. In der Praxis werden die Matrixlöcher gestanzt, was üblicherweise bedeutet, daß sich das Loch konisch nach hinten erweitert und so auch bei großen Wandstärken ein Platz für den Wulst 13 vorhanden ist. Die Dauerhaftigkeit der Verbindung ist dadurch sichergestellt, daß einerseits der Bereich plastischer Verformung im Inneren des Gerätes liegt und der Witterung nicht unmittelbar ausgesetzt ist.

Weiters werden Materialien gewählt, die innere Spannungen entweder abbauen oder unbeschadet überstehen. Günstig sind Plexiglas für die Optikelemente und schwarzes Polyamid für die Optikgehäuse. Plexiglas ist wesentlich härter als Polyamid und kann deshalb das Gehäuse plastisch verformen. Weil das Optikgehäuse ein geschlossener Zylinder ist, ist einerseits maximale Stabilität gegeben, anderseits ist auch das Optikelement vor Staub und Fremdlichteinwirkung geschützt.

Weiters erlaubt die einfache Gehäuseausführung auch die Integration beliebiger Halterungen für dei Lichtleiterenden.

Es ist offensichtlich, daß die Montage mit einfachen Mitteln automatisierbar ist. Es ist auch einsichtig, daß die Optik nicht größer in den Abmessungen baut als bisherige Ausführungen. Die Unabhängigkeit von der Art der Optik wird durch Darstellung der beiden gebräuchlichsten Optiken gezeigt. Zur Demontage ist lediglich das Optikelement von hinten aus dem Optikgehäuse zu schlagen. Dann kann das Gehäuse ebenfalls aus dem Loch geschlagen werden. Hierbei schlüpft der Wulst 13 durch das Loch, weil dieser nun nach innen nachgeben kann.

Für nachträgliche Optikbestückung an fertigen Geräten ist lediglich ein zylindrisches Loch mit passendem Querschnitt zu bohren und zu entgraten.

Die folgenden Ausführungen schildern Abwandlungen der beschriebenen Ausführung, deren Eigenschaftsprofile oft nicht alle geschilderten Vorteile aufweisen, die in vielen denkbaren Anwendungsfällen aber ihre Daseinsberechtigung haben.

Eine vereinfachte Ausführungsform entsteht, wenn das Flächenpaar 11+12 ohne Übermaß ausgeführt oder ganz weggelassen wird. Die Optik weist hierbei ebenfalls sehr guten Halt auf, allerdings bei reduzierter Positionsgenauigkeit und Dichtwirkung durch Entfall einer Dichtfläche.

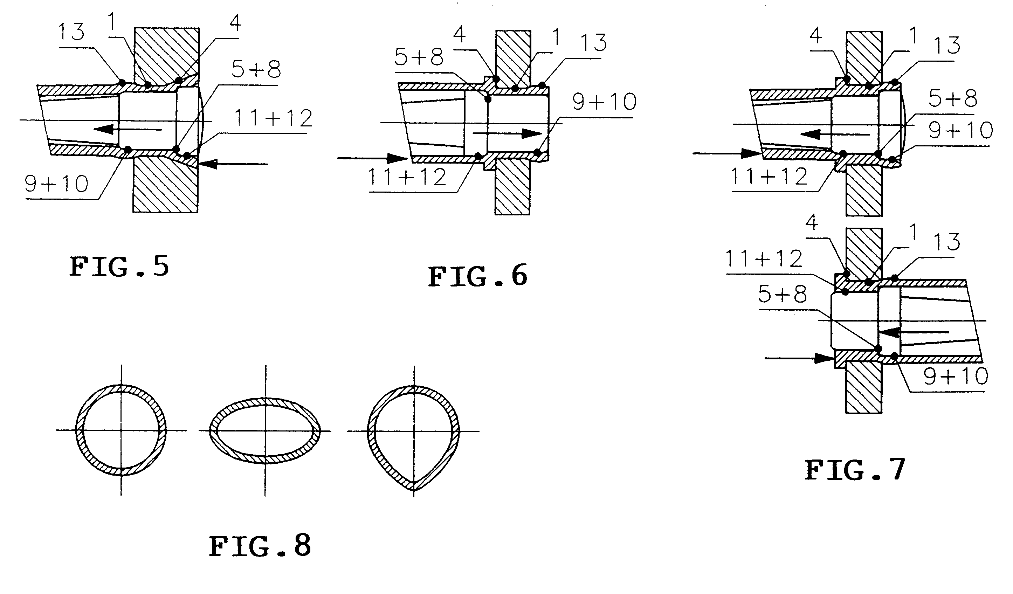

Fig. 5 zeigt eine mögliche Ausführungsform für Optiken, welche nicht über die Matrixplatte vorstehen. Die Auflagefläche 4 ist hier konisch ausgeführt und paßt in eine entsprechende Senkung des Matrixplattenloches.

Fig. 6 zeigt eine Ausführungsform, bei welcher Gehäuse und Optikelement von der Rückseite der Matrixplatte eingesetzt werden.

Fig. 7 zeigt eine Ausführungsform, bei welcher das Optikgehäuse von der einen, das Optikelement von der anderen Seite in das Matrixloch eingesetzt wird, wobei im Prinzip jede Seite als Außenseite festgelegt werden kann.

Fig. 8 zeigt, daß Lochform und Querschnitt des Optikelementes auch unrund sein können, vor allem, wenn Optiken mit orientierter Lichtausstrahlung gegen falschen Einbau oder Verdrehen gesichert werden müssen. Z.B. ist bei vertikal schmaler, horizontal breitstreuender Lichtverteilung ein elliptischer Querschnitt sinnvoll, bei schräger Abstrahlrichtung darf die Optik nur eine einzige Montageposition besitzen (etwa tropfenförmiger Querschnitt). Auch Poligonquerschnitte sind denkbar, allerdings bei den Ecken nur sehr schwer abzudichten.

## Patentansprüche

1. Geometrische Ausbildung einer Faseroptik-Linseneinheit und Montageverfahren in eine Matrixplatte, wobei das vollwandige, transparente Optikelement in das in ein Loch der Matrixplatte eingesetzte, rohrförmige Gehäuse eingepreßt wird und dieses hierbei nietenartig aufweitet, daudrch gekennzeichnet, daß das vorzugsweise aus Kunststoff gefertigte Gehäuse außen einen zylindrischen Umfang (1) mit als Auflagefläche dienenden Bund (4) und innen vorzugsweise zumindest einen zylindrischen Bereich (10) im Bereich der dem Bund (4) abgwandten Kante des Matrixloches und eine Anschlagfläche (5) für das Optikelement aufweist, daß das transparente Optikelement ebenfalls zumindest einen zyLindrischen Bereich (9) und eine Anschlagfläche (8) an übereinstimmender Position zum Gehäuse aufweist, und daß das Flächenpaar (9+10) ein so großes geometrisches Übermaß aufweist, daß es beim Fügen das Gehäuse zu einem Wulst (13) aufweitet und hierdurch im Loch formschlüssig fixiert, positioniert und abdichtet.

2. Anordnung nach Anspruch 1, dadurch gekennzeichnet, daß das Gehäuse innen mindestens einen weiteren zylindrischen Bereich (12), vorzugsweise im Bereich des Bundes (4), und das Optikelement mindestens einen weiteren zylindrischen Bereich (11) an übereinstimmender Position zum Gehäuse aufweist, und daß das Flächenpaar (11+12) ein vorzugsweise geringes geometrisches Übermaß aufweist, welches beim Fügen durch Pressung einen strammen Sitz der Optik und eine Abdichtung zwischen matrixplatte, Gehäuse und Optikelement mindestens im Bereich des Bundes (4) bewirkt.

3. Anordnung nach Anspruch 1 oder 2, dadurch gekennzeichnet, daß die wirksamen Flächen so angeordnet sind, daß die Montage von Gehäuse und Optikelement von derselben Seite der Matrixplatte erfolgt, wobei jede der beiden Seiten als Vorderseite verwendet werden kann.

4. Anordnung nach Anspruch 1 oder 2, dadurch gekennzeichnet, daß die wirksamen Flächen so angeordnet sind, daß das Gehäuse von der einen Seite, das Optikelement von der anderen Seite der Matrixplatte montiert wird, wobei jede der beiden Seiten als Vorderseite verwendet werden kann.

5. Anordnung nach Anspruch 1 bis 4, dadurch gekennzeichnet, daß die Auflagefläche (4) des Gehäuses plan ist und auf der äußeren oder inneren Oberfläche der Matrixplatte aufliegt.

6. Anordnung nach Anspruch 1 bis 4, dadurch gekennzeichnet, daß die Auflagefläche (4) des Gehäuses konisch ausgeführt ist und in einem passenden konischen Bereich des Matrixplattenloches aufliegt.

7. Anordnung nach einem oder mehreren Ansprüchen 1 bis 6, dadurch gekennzeichnet, daß die Anschlußflächen im Bereich der bezeichneten Oberflächen Einlauframpen für die Fügeflächen bilden.

8. Anordnung nach einem oder mehreren Ansprüchen 1 bis 6, dadurch gekennzeichnet, daß sowohl Matrixlochquerschnitt, Gehäusequerschnitt als auch Optikelementquerschnitt im Bereich der Verbindung kreisförmige, elliptische oder beliebige andere Gestalt haben.
